# EUROPÄISCHE PATENTSCHRIFT

(11) **EP 0 606 859 B1**
(45) Veröffentlichungstag und Bekanntmachung des Hinweises auf die Patenterteilung: **08.04.1998**
(21) Anmeldenummer: 94100194.3
(22) Anmeldetag: 07.01.1994
(51) Int. Cl.: D06M 11/38, C04B 16/06, D01F 6/80, D06M 101/36

(54) **Verfahren zum Erhalt oder zur Verbesserung der mechanischen Eigenschaften von Fasern aus aromatischen Copolyamiden in alkalischen Medien und Formkörper enthaltend solche Fasern**
Process to maintain or to improve the mechanical properties of aromatic copolyamide fibers in alkaline medium and articles containing these fibers
Procédé pour maintenir ou améliorer les propiétés mécaniques de fibres de copolyamides aromatiques dans un milieu alcalin et objets contenant ces fibres

(30) Priorität: 13.01.1993 DE 4300626
(43) Veröffentlichungstag der Anmeldung: 20.07.1994
(73) Patentinhaber: HOECHST AKTIENGESELLSCHAFT, 65929 Frankfurt am Main (DE)
(72) Erfinder: Neuert, Richard, Dr., D-90610 Winkelhaid (DE); Miess, Georg-Emerich, Dr., D-93049 Regensburg (DE)

(56) Entgegenhaltungen:
- EP-A- 0 199 090
- EP-A- 0 227 452
- EP-A- 0 499 230
- US-A- 4 974 522
- CHEMIEFASERN/TEXTILINDUSTRIE Bd. 42, Nr. 10 , Oktober 1992 , FRANKFURT/MAIN, DE Seiten T128 - T132 DR. W. GESSNER 'Neue Möglichkeiten mit neuen Aramidfasern'
- TEXTILE RESEARCH JOURNAL Bd. 62, Nr. 12 , Dezember 1992 , PRINCETON, NJ, US Seiten 771 - 775 K. HEINRICH ET AL. 'New Concepts in para-Aramid Fibers'
- DATABASE WPI Section Ch, Week 8639, Derwent Publications Ltd., London, GB; Class A, AN 86-255330 & JP-A-61 183 155 (KAJIMA KK & TEIJIN KK) 15. August 1986
- DATABASE WPI Section Ch, Week 8342, Derwent Publications Ltd., London, GB; Class A, AN 83-791353 & JP-A-58 151 363 (TEIJIN KK) 8. September 1983
- DATABASE WPI Section Ch, Week 7903, Derwent Publications Ltd., London, GB; Class A, AN 79-04686B & JP-A-53 138 422 (ASAHI CHEMICAL IND KK) 2. Dezember 1978

## Beschreibung

Die vorliegende Erfindung betrifft ein Verfahren zum Erhalt oder zur Verbesserung der mechanischen Eigenschaften von Fasern aus aromatischen Copolyamiden in alkalischen Medien, d. h. den Erhalt oder die Erhöhung der Faserzugfestigkeit, und diejenigen Formkörper enthaltend solche Fasern und hydraulisch abbindende anorganische Materialien.

Aromatische Polyamide (im folgenden Aramide genannt) sind als faserbildende Polymere mit guter Chemikalienbeständigkeit bekannt. Fasern aus Aramiden, welche überwiegend aus para-Monomeren aufgebaut sind, zeichnen sich ferner durch gute mechanische Eigenschaften, wie hohe Zugfestigkeiten und Elastizitätsmoduli aus.

Die Säure- und Alkalibeständigkeit handelsüblicher Fasern aus para-Aramiden läßt zum Teil zu wünschen übrig, so daß sich solche Fasern nicht ohne weiteres zur Herstellung von Verbundwerkstoffen einsetzen lassen, welche stark saure oder alkalische Matrixmaterialien enthalten. Der Abfall der Zugfestigkeit von Fasern aus solchen Aramiden bei der Lagerung in stark sauren oder alkalischen Medien, wie Schwefelsäure oder Natronlauge wird mit einer teilweisen Hydrolyse der Amidbindungen des Polymeren erklärt (vergl. H.H. Yang, Aromatic High-Strength Fibers, S. 248-251 undS. 274-276, J. Wiley & Sons). Es sind allerdings bereits Aramidfasern bekannt geworden, die eine gegenüber klassischen Aramidfasern verbesserte Säure- und Alkalibeständigkeit sowie eine geringe Feuchtigkeitsaufnahme aufweisen und deren Einsatz für die Verstärkung von Faserzement bereits vorgeschlagen worden ist (vergl. Technische Textilien, 35. Jahrgang, Oktober 1992, T128-T132).

Aus JP-A-58-151,363 ist bekannt, daß eine Sattdampfbehandlung von faserverstärkten Betonteilen zu einer erhöhten Zug- und Biegefestigkeit derselben führt. Grundvoraussetzung für eine derartige Behandlung ist, daß die Bauteile aus faserverstärktem Beton in einen Autoklaven passen, so daß nur relativ kleine Betonteile einer derartigen Behandlung unterzogen werden können.

Es wurde jetzt gefunden, daß Fasern aus bestimmten aromatischen Copolyamiden, welche hauptsächlich aus para-Monomeren aufgebaut sind und in organischen aprotischen und polaren Lösungsmitteln löslich sind, durch Behandlung mit stark alkalischen Umgebungen einen Erhalt oder eine Erhöhung ihrer Zugfestigkeit sowie anderer mechanischer Eigenschaften, wie Modul oder Reißdehnung, erfahren.

Dieses Verhalten ist um so überraschender, als man aufgrund der Erfahrungen an vorbekannten para-Aramiden, welche lediglich in agressiven Medien, wie in konzentrierter Schwefelsäure löslich sind, nicht mit einem Anstieg bzw. Erhalt der mechanischen Eigenschaften sondern im Gegenteil mit einem Abfall dieser Eigenschaften in einer stark alkalischer Umgebung mit der Zeit zu rechnen hatte.

Die vorliegende Erfindung betrifft ein Verfahren zum Erhalt oder zur Erhöhung der Zugfestigkeit bei der Einlagerung von Multifilamenten aus aromatischen Copolyamiden, welche überwiegend aus para-Monomeren aufgebaut sind und in organischen aprotischen und polaren Lösungsmitteln löslich sind, in alkalische Medien, umfassend die Maßnahmen:
a) Herstellen von Multifilamenten aus besagten aromatischen Copolyamiden nach an sich üblichen Trocken- oder Naßspinnverfahren,
b) Nachbehandlung der erhaltenen Multifilamente in an sich bekannter Weise, und
c) Einlagerung von Multifilamenten mit einem Gesamttiter von 840 bis 18400 dtex in einer wässrigen Aufschlämmung oder Abmischung eines hydraulisch abbindenden anorganischen Materials, inbesondere Beton oder Zement, welche einen pH-Wert von mindestens 10, vorzugsweise von größer gleich 12, insbesondere von 12 bis 14, aufweist, zumindest für eine solche Zeitspanne und bei einer Temperatur von 20 bis 100°C, so daß die Zugfestigkeit besagter Fasern, bezogen auf die Zugfestigkeit der in Schritt c) eingesetzten Fasern, zumindest erhalten bleibt oder sich erhöht, wobei eine nachfolgende Sattdampfbehandlung in einem Autoklaven ausgeschlossen ist.

Unter dem Begriff "aromatisches Copolyamid, welches überwiegend aus para-Monomeren aufgebaut ist und in organischen aprotischen und polaren Lösungsmitteln löslich ist" ist im Rahmen dieser Erfindung ein Copolyamid zu verstehen, das in herkömmlichen Lösungsmitteln für Polyamide, beispielsweise in N-Methylpyrrolidon, bei 25°C zu mindestens 4 bis 12 Gew.-% besonders gut zu 5,0 bis 7,5 Gew.-% löslich ist und das neben mindestens einer aromatischen Dicarbonsäurekomponente mindestens zwei aromatische Diaminkomponenten aufweist.

Dabei leitet sich die Dicarbonsäurekomponente hauptsächlich, insbesondere zu mehr als 90 Mol %, bezogen auf die Gesamtmenge an Dicarbonsäurekomponenten im Polymer, von zweiwertigen aromatischen Resten ab, bei denen die Carboxylgruppen in para- oder vergleichbarer koaxialer oder paralleler Stellung stehen.

Ferner leitet sich mindestens eine der Diaminkomponenten von zweiwertigen aromatischen Resten ab, deren Aminogruppen sich in para- oder in vergleichbarer koaxialer oder paralleler Stellung befinden; diese Diaminkomponente, welche auch eine Mischung verschiedender Diamine dieses Typs darstellen kann, ist üblicherweise zu mindest 50 Mol %, bezogen auf die Gesamtmenge der Diaminkomponenten im Polymer, vorzugsweise zu mehr als 60 Mol %, bezogen auf die Gesamtmenge an Diaminkomponenten im Polymer, in diesem enthalten.

Mindestens eine der Diaminkomponenten leitet sich von zweiwertigen aromatischen Resten ab, deren Aminogruppen sich in gewinkelter Stellung zueinander befinden, beispielsweise in meta- oder in vergleichbarer gewinkelter Stellung zueinander; diese Diaminkomponente, welche auch eine Mischung verschiedender Diamine dieses Typs darstellen kann, ist üblicherweise zu bis zu 50 Mol %, bezogen auf die Gesamtmenge der Diaminkomponenten im Polymer, vorzugsweise zu weniger als 40 Mol %, bezogen auf die Gesamtmenge an Diaminkomponenten im Polymer, in diesem enthalten.

Unter dem Begriff "übliches Trocken- oder Naßspinnverfahren" ist im Rahmen dieser Erfindung ein Herstellungsverfahren von Spinnfasern zu verstehen, bei dem im weitesten Sinne beim Verspinnen Lösungen des Polymeren in einem organischen aprotischen und polaren Lösungsmittel zur Verwendung kommen. Beispiele dafür sind Trockenspinnverfahren, Naßspinnverfahren oder Trockendüsen-Naßspinnverfahren.

Unter dem Begriff "Nachbehandlung" sind im Rahmen dieser Erfindung an sich übliche Nachbehandlungen der ersponnenen Multifilamente zu verstehen, wie Verstrecken, Fixieren, Waschen, Präparieren und Trocknen.

Die notwendige Zeitspanne der Einlagerung ist jeweils im Einzelfall zu bestimmen, wobei Routineverfahren Anwendung finden können.

Die erfindungsgemäß behandelten oder zu behandelnden Aramidfasern werden bevorzugt in Mischung mit Zement, Mörtel, Beton, Gips gegebenenfalls in Kombination mit organischen Versiegelungsmitteln - also in Baustoffmitteln im weitesten Sinne - eingesetzt.

Bei dem Einlagermedium handelt es sich um eine wässrige Aufschlämmung oder Abmischung eines hydraulisch abbindenden anorganischen Materials, inbesondere Zement oder Beton.

Ganz besonders bevorzugt wird als Einlagermedium eine wässrige Abmischung eines hydraulisch abbindenden anorganischen Materials verwendet und die Lagerung erfolgt nach dem Einmischen der Fasern und der Formgebung der erhaltenen geformten Mischung.

Die eingelagerten Aramid-Multifilamente werden in der stark alkalischen Umgebung Temperaturen von 20 bis 100°C ausgesetzt, insbesondere Temperaturen von 20 bis 60°C. Die Gebrauchstemperaturen der erhaltenen Formkörper können beispielsweise zwischen -50°C und +60°C liegen.

Die Zeitspanne der Einlagerung hängt von den im Einzelfall gewählten Bedingungen ab, wie pH-Wert des Lagermediums und Lagertemperatur. Üblicherweise ist der Endzustand der Anstieg der Multifilamente innerhalb einiger Tage erreicht. Bei höheren Temperaturen können bereits Stunden ausreichen.

Bei der Einlagerung tritt keine Verringerung der Zugfestigkeit der Multifilamente, sondern ein Erhalt oder insbesondere eine Erhöhung der Zugfestigkeit der Multifilamente ein; typische Werte der Erhöhung liegen im Bereich von 1 bis 20 %, vorzugsweise 2 bis 10 %.

Neben der Zugfestigkeit erhöht sich in der Regel auch die Reißdehnung der Multifilamente. Der Elastizitätsmodul bleibt in der Regel mehr oder weniger konstant.

Aus diesen Multifilamente sind Formkörper mit hohen Druckfestigkeiten und einen hohen Arbeitsaufnahmeverhältnis herstellbar.

Vorzugsweise setzt man im erfindungsgemäßen Verfahren Aramid-Multifilamente ein, die vor der Einlagerung in die anorganische Matrix eine Zugfestigkeit von mindestens 120 cN/tex, besonders 150 bis 290 cN/tex, insbesondere 150 bis 250 cN/tex, und einen Elastizitätsmodul, bezogen auf 100 % Dehnung, von mehr als 30 N/tex, besonders von 45 bis 100 N/tex, insbesondere von 45 bis 90 N/tex, aufweisen.

Besonders bevorzugt setzt man im erfindungsgemäßen Verfahren aromatische Copolyamide ein, welche eine inhärente Viskosität von mindestens 2,4 dl/g, vozugsweise von 3,0 bis 6,5 dl/g (gemessen an Lösungen von 0,5 g Polyamid in 100 ml 98 gew%iger Schwefelsäure bei 25°C) und wenigstens die wiederkehrenden Struktureinheiten der Formeln I, II und III aufweisen

(-OC-Ar-CO-NH-Ar'-NH-) (I),

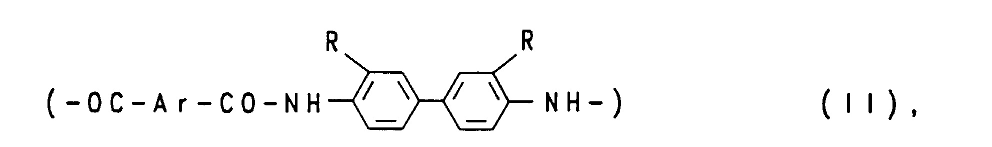

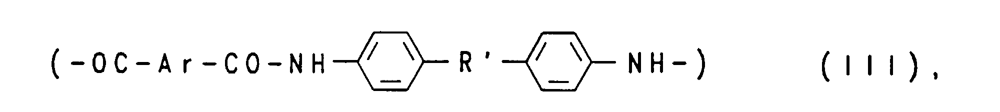

worin -Ar- und -Ar'- zweiwertige organische Reste sind, bei denen die Valenzbindungen in para- oder vergleichbarer koaxialer oder paralleler Stellung zueinander stehen,
R einen C₁-C₄-Alkylrest, insbesondere Methyl, einen C₁-C₄-Alkoxyrest, insbesondere Methoxy oder ein Chloratom darstellt,
R'einen unsubstituierten oder alkylsubstituierten Methylenrest oder eine Gruppierung
-O-Ar-O- darstellt, worin -Ar- die oben definierte Bedeutung annimmt, und die Anteile der wiederkehrenden Struktureinheiten I, II und III, bezogen auf die Gesamtmenge dieser Struktureinheiten im Polymeren, innerhalb eines Bereiches liegen, der durch die folgenden Eckpunkte definiert ist:
   Punkt Q entsprechend 5 Mol % Struktureinheiten der Formel I,
      45 Mol % Struktureinheiten der Formel II und 50 Mol % Struktureinheiten der Formel III,
   Punkt R entsprechend 45 Mol % Struktureinheiten der Formel I,
      5 Mol % Struktureinheiten der Formel II und 50 Mol % Struktureinheiten der Formel III,
   Punkt S entsprechend 60 Mol % Struktureinheiten der Formel I,
      35 Mol % Struktureinheiten der Formel II und 5 Mol % Struktureinheiten der Formel III,
   Punkt T entsprechend 20 Mol % Struktureinheiten der Formel I,
      75 Mol % Struktureinheiten der Formel II und 5 Mol % Struktureinheiten der Formel III, und
   Punkt U entsprechend 5 Mol % Struktureinheiten der Formel I,
      80 Mol % Struktureinheiten der Formel II und 15 Mol % Struktureinheiten der Formel III.

Aramide dieses Typs sind aus der EP-A-199,090 bekannt, welche ebenfalls Gegenstand der vorliegenden Beschreibung ist.

Besonders bevorzugt setzt man Typen dieser Aramide ein, worin -Ar- und -Ar'- 1,4-Phenylen sind, R Methoxy oder Chlor oder insbesondere Methyl darstellen und R' -O-1,4-Phenylen-O- ist, wobei die Mengenanteile der wiederkehrenden Struktureinheiten, bezogen auf die Gesamtmenge dieser Struktureinheiten innerhalb des Polymeren, innerhalb der folgenden Bereiche liegen:
wiederkehrende Struktureinheit der Formel I: 5 bis 60 Mol %,
vorzugsweise 15 bis 45 Mol %,
wiederkehrende Struktureinheit der Formel II: 5 bis 80 Mol %,
vorzugsweise 20 bis 70 Mol %, und
wiederkehrende Struktureinheit der Formel III: 5 bis 50 Mol %,
vorzugsweise 15 bis 50 Mol %.

Ebenfalls besonders bevorzugt setzt man im erfindungsgemäßen Verfahren aromatische Copolyamide ein, welche eine inhärente Viskosität von mindestens 2,4 dl/g, vorzugsweise 3,0 bis 6,5 dl/g (gemessen an Lösungen von 0,5 g Polyamid in 100 ml 98 gew%iger Schwefelsäure bei 25°C) und wenigstens die wiederkehrenden Struktureinheiten der Formeln I, IV und V aufweisen

(-OC-Ar-CO-NH-Ar'-NH-) (I),

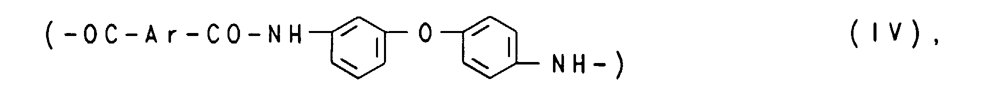

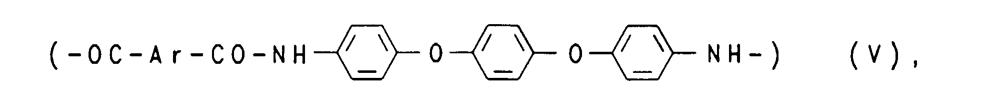

worin -Ar- und -Ar'- die oben definierten Bedeutungen besitzen, und die Anteile der wiederkehrenden Struktureinheiten I, IV und V, bezogen auf die Gesamtmenge dieser Struktureinheiten im Polymeren, innerhalb folgender Bereiche liegen:
wiederkehrende Struktureinheit der Formel I: 40 bis 65 Mol %,
vorzugsweise 45 bis 55 Mol %,
wiederkehrende Struktureinheit der Formel IV: 5 bis 55 Mol %,
vorzugsweise 35 bis 45 Mol %, und
wiederkehrende Struktureinheit der Formel V: 5 bis 35 Mol %,
vorzugsweise 5 bis 25 Mol %.

Aramide dieses Typs sind aus der EP-A-499,230 bekannt, welche ebenfalls Gegenstand der vorliegenden Beschreibung ist.

Besonders bevorzugt setzt man Typen dieser Aramide ein, worin -Ar- und -Ar'- 1,4-Phenylen sind.

Zur Durchführung des erfindungsgemäßen Verfahrens können die Aramid-Multifilamente in Form von Kurzschnitt, Stapelfasern oder von Endlosfilamenten eingelagert werden. Stapelfasern besitzen beispielsweise eine Stapellänge von 1,5 bis 48 mm, vorzugsweise 3 bis 24 mm, insbesondere 4 bis 12 mm. Formkörper enthaltend Endlosfilamente können beispielsweise unidirektional verstärkte Formkörper oder im Wickelverfahren verstärkte Formkörper sein.

Hinsichtlich des Einzelfasertiters ist das erfindungsgemäße Verfahren keinen Beschränkungen unterworfen. Typische Einzelfasertiter liegen oberhalb von 1,0 dtex, vorzugsweise im Bereich von 1,7 bis 15 dtex.

Endlosfilamente werden im allgemeinen als Multifilamente eingelagert. Deren Gesamttiter liegt typisch im Bereich von 840 bis 18400 dtex. Es wurde gefunden, daß der Festigkeitsanstieg beim Einsatz von Multifilamenten mit höheren Gesamttitern ausgeprägter ist, weshalb der Einsatz solcher Multifilamente besonders bevorzugt ist.

Das Einmischen von Stapelfasern in die Matrix kann mit konventionellen Mischaggregaten erfolgen; so kann beispielsweise das Einlagern von Stapelfasern in die Matrix aus hydraulisch abbindenden Materialien mittels praxisüblicher Zwangs-, Pflugschar- und anderer derartiger Mischer erfolgen. Die Matrix liegt vorzugsweise als anorganisches Material vor, wie in der Form von Feinanteilen, wie Gips, Zement, Kalksteinmehl, bis zu Grobbestandteilen, wie Sand, Kies und Steinen. Das Einmischen in das anorganische Material kann in trockenem oder in feuchtem Zustand erfolgen.

Das Einbringen von Multifilamenten in die Matrix kann ebenfalls nach an sich bekannten Verfahren erfolgen, beispielsweise durch Einlagern vorgeformter Körper aus Multifilamenten mit hydraulisch abbindenden Materialien; diese ergeben nach dem Abbinden den gewünschten Formkörper. Dabei handelt es sich vorzugsweise um unidirektional verstärkte Formkörper oder um im Wickelverfahren verstärkte Formkörper.

Ferner wurde gefunden, daß der Erhalt oder der Anstieg der Zugfestigkeit bei der Langzeitlagerung im wesentlichen erhalten bleibt. Die Eigenschaftsverbesserung der Multifilamente läßt sich insbesondere bei der Herstellung und Anwendung von Formkörpern ausnutzen, welche aus einer Kombination der erfindungsgemäß zu verwendenden Aramid-Multifilamente und einer wässrigen Abmischung eines hydraulisch abbindenden anorganischen Materials hergestellt werden. Die Erfindung betrifft daher auch die derart erhältlichen Formkörper.

Die erfindungsgemäß behandelten oder zu behandelnden Multifilamente lassen sich zur Herstellung von Gips, Zement, Mörteln, Putzen, Estrich oder Beton einsetzen.

Die folgenden Beispiele erläutern die Erfindung, ohne diese zu begrenzen.

### Allgemeine Arbeitsvorschrift

In den folgenden Beispielen werden Multifilamente eingesetzt, welche aus einem Aramid auf der Basis von 100 Mol % Terephthalsäure, 25 Mol % para-Phenylendiamin, 25 Mol % 1,4-Bis-(4-aminophenoxy)-benzol und 50 Mol % 3,3'-Dimethylbenzidin (Aramid I) bzw. aus einem Aramid auf der Basis von 100 Mol % Terephthalsäure, 50 Mol % para-Phenylendiamin, 15 Mol % 1,4-Bis-(4-aminophenoxy)-benzol und 35 Mol % 3,4'-Diaminodiphenylether (Aramid II) bestehen.

Das Faserkabel wird durch ein übliches Naßspinnverfahren durch Verspinnen einer Polymerlösung in N-Methylpyrrolidon in ein Fällbad und eine Nachbehandlung umfassend Waschen, Verstrecken und Trocknen erzeugt.

Die Einlagerung erfolgt in Zementfiltrat: Portland Zement PZ 35 (200 g in 1 l Wasser).

### Beispiele 1-4:

Ein Faserkabel aus Aramid I des Gesamttiters von 1680 dtex wird 24 Stunden lang in Zementfiltrat des pH-Werts von 12,5 und bei unterschiedlichen Temperaturen gelagert. In Tabelle 1 werden Zugfestigkeiten, Moduli und Reißdehnungen der Proben nach dem Lagern angegeben. Beispiel 1 zeigt die Werte für die unbehandelte Faser.

**Tabelle 1:**

| Beispiel Nr. | 1 | 2 | 3 | 4 |
|---|---|---|---|---|
| Lagertemperatur (°C) | - | 22 | 60 | 95 |
| Zugfestigkeit (cN/tex) | 204 | 221 | 226 | 230 |
| Modul (N/tex) | 60,3 | 60,7 | 60,2 | 58,5 |
| Reißdehnung (%) | 3,4 | 3,7 | 3,8 | 4,0 |

### Beispiele 5-8:

Ein Faserkabel aus Aramid I des Gesamttiters von 1100 dtex wird 24 Stunden lang in Natronlauge unterschiedlichen pH-Werts bei 60°C gelagert. In Tabelle 2 werden Zugfestigkeiten, Moduli und Reißdehnungen der Proben nach dem Lagern angegeben. Beispiel 5 zeigt die Werte für die unbehandelte Faser.

**Tabelle 2:**

| Beispiel Nr. | 5 | 6 | 7 | 8 |
|---|---|---|---|---|
| pH-Wert | - | 10 | 12 | 14 |
| Zugfestigkeit (cN/tex) | 196 | 203 | 201 | 207 |
| Modul (N/tex) | 60,3 | 60,2 | 59,1 | 58,5 |
| Reißdehnung (%) | 3,5 | 3,6 | 3,6 | 3,8 |

### Beispiele 9-12:

Ein Faserkabel aus Aramid I des Gesamttiters von 1680 dtex wird 24 Stunden lang in Natronlauge unterschiedlichen pH-Werts bei 60°C gelagert. In Tabelle 3 werden Zugfestigkeiten, Moduli und Reißdehnungen der Proben nach dem Lagern angegeben. Beispiel 9 zeigt die Werte für die unbehandelte Faser.

**Tabelle 3:**

| Beispiel Nr. | 9 | 10 | 11 | 12 |
|---|---|---|---|---|
| pH-Wert | - | 10 | 12 | 14 |
| Zugfestigkeit (cN/tex) | 204 | 207 | 229 | 231 |
| Modul (N/tex) | 60,3 | 60,4 | 61,2 | 61,4 |
| Reißdehnung (%) | 3,4 | 3,5 | 3,9 | 3,9 |

### Beispiele 13-16:

Ein Faserkabel aus Aramid II des Gesamttiters von 1100 dtex wird 24 Stunden lang in Natronlauge unterschiedlichen pH-Werts bei 60°C gelagert. In Tabelle 4 werden Zugfestigkeiten, Moduli und Reißdehnungen der Proben nach dem Lagern angegeben. Beispiel 13 zeigt die Werte für die unbehandelte Faser.

**Tabelle 4:**

| Beispiel Nr. | 13 | 14 | 15 | 16 |
|---|---|---|---|---|
| pH-Wert | - | 10 | 12 | 14 |
| Zugfestigkeit (cN/tex) | 225 | 228 | 230 | 231 |
| Modul (N/tex) | 47,4 | 46 | 47 | 46 |
| Reißdehnung (%) | 4,6 | 4,8 | 4,8 | 4,9 |

### Beispiele 17-20:

Ein Faserkabel aus Aramid I des Gesamttiters von 1100 dtex wird 24 Stunden lang in Zementfiltrat des pH-Werts von 12,5 und bei unterschiedlichen Temperaturen gelagert. In Tabelle 5 werden Zugfestigkeiten, Moduli und Reißdehnungen der Proben nach dem Lagern angegeben. Beispiel 17 zeigt die Werte für die unbehandelte Faser.

**Tabelle 5:**

| Beispiel Nr. | 17 | 18 | 19 | 20 |
|---|---|---|---|---|
| Lagertemperatur (°C) | - | 22 | 60 | 95 |
| Zugfestigkeit (cN/tex) | 196 | 206 | 213 | 211 |
| Modul (N/tex) | 60,3 | 59,9 | 59,3 | 57,0 |
| Reißdehnung (%) | 3,5 | 3,6 | 3,7 | 3,9 |

### Beispiele 21-24:

Ein Faserkabel aus Aramid II des Gesamttiters von 1100 dtex wird 24 Stunden lang in Zementfiltrat des pH-Werts von 12,5 und bei unterschiedlichen Temperaturen gelagert. In Tabelle 6 werden Zugfestigkeiten, Moduli und Reißdehnungen der Proben nach dem Lagern angegeben. Beispiel 21 zeigt die Werte für die unbehandelte Faser.

**Tabelle 6:**

| Beispiel Nr. | 21 | 22 | 23 | 24 |
|---|---|---|---|---|
| Lagertemperatur (°C) | - | 22 | 60 | 95 |
| Zugfestigkeit (cN/tex) | 225 | 230 | 229 | 225 |
| Modul (N/tex) | 47,4 | 45,6 | 45,7 | 45,2 |
| Reißdehnung (%) | 4,6 | 4,9 | 4,8 | 4,8 |

### Beispiele 25-35:

Ein Faserkabel aus Aramid I des Gesamttiters von 1680 dtex wird über einen längeren Zeitraum in Zementfiltrat des pH-Werts 12,5 bei 80°C gelagert. Von Zeit zu Zeit werden Faserproben entnommen deren mechanische Eigenschaften ermittelt werden. In Tabelle 7 werden Zugfestigkeiten, Moduli und Reißdehnungen der unterschiedlich lange gelagerten Proben angegeben.

**Tabelle 7:**

| Beispiel Nr. | 25 | 26 | 27 | 28 | 29 | 30 | 31 | 32 | 33 | 34 | 35 |
|---|---|---|---|---|---|---|---|---|---|---|---|
| Lagerzeit (Tage) | 0 | 1 | 2 | 3 | 4 | 5 | 9 | 15 | 20 | 26 | 30 |
| Zugfestigkeit | 210 | 214 | 221 | 227 | 230 | 227 | 228 | 227 | 228 | 228 | 232 |
| (cN/tex) | | | | | | | | | | | |
| Modul (N/tex) | 60,3 | 58,5 | 59 | 58,2 | 58,2 | 58,0 | 58,6 | 59,0 | 58,0 | 58,2 | 59,3 |
| Reißdehnung (%) | 3,4 | 3,8 | 3,9 | 4,0 | 4,0 | 4,0 | 4,0 | 3,9 | 4,0 | 4,0 | 4,0 |

### Beispiele 36-46:

Ein Faserkabel aus Aramid I des Gesamttiters von 1100 dtex wird über einen längeren Zeitraum in Zementfiltrat des pH-Werts 12,5 bei 80°C gelagert. Von Zeit zu Zeit werden Faserproben entnommen deren mechanische Eigenschaften ermittelt werden. In Tabelle 8 werden Zugfestigkeiten, Moduli und Reißdehnungen der unterschiedlich lange gelagerten Proben angegeben.

**Tabelle 8:**

| Beispiel Nr. | 36 | 37 | 38 | 39 | 40 | 41 | 42 | 43 | 44 | 45 | 46 |
|---|---|---|---|---|---|---|---|---|---|---|---|
| Lagerzeit (Tage) | 0 | 1 | 2 | 3 | 4 | 5 | 9 | 15 | 20 | 26 | 30 |
| Zugfestigkeit | 201 | 209 | 211 | 206 | 211 | 212 | 212 | 210 | 209 | 212 | 213 |
| (cN/tex) | | | | | | | | | | | |
| Modul (N/tex) | 60 | 58,0 | 57,0 | 58,0 | 58 | 58,8 | 59,3 | 57,4 | 57,9 | 58,1 | 58,2 |
| Reißdehnung (%) | 3,5 | 3,7 | 3,9 | 3,7 | 3,8 | 3,8 | 3,7 | 3,8 | 3,8 | 3,8 | 3,8 |

### Beispiele 47-57:

Ein Faserkabel aus Aramid II des Gesamttiters von 1100 dtex wird über einen längeren Zeitraum in Zementfiltrat des pH-Werts 12,5 bei 80°C gelagert. Von Zeit zu Zeit werden Faserproben entnommen deren mechanische Eigenschaften ermittelt werden. In Tabelle 9 werden Zugfestigkeiten, Moduli und Reißdehnungen der unterschiedlich lange gelagerten Proben angegeben.

**Tabelle 9:**

| Beispiel Nr. | 47 | 48 | 49 | 50 | 51 | 52 | 53 | 54 | 55 | 56 | 57 |
|---|---|---|---|---|---|---|---|---|---|---|---|
| Lagerzeit (Tage) | 0 | 1 | 2 | 3 | 4 | 5 | 9 | 15 | 20 | 26 | 30 |
| Zugfestigkeit | 212 | 220 | 215 | 214 | 218 | 215 | 225 | 221 | 217 | 225 | 221 |
| (cN/tex) | | | | | | | | | | | |
| Modul (N/tex) | 45,1 | 45,0 | 44,0 | 45,0 | 44,0 | 44,1 | 45,2 | 45,8 | 44,7 | 45,1 | 44,2 |
| Reißdehnung (%) | 4,7 | 4,5 | 4,7 | 4,5 | 4,7 | 4,7 | 4,8 | 4,6 | 4,7 | 4,8 | 4,7 |

### Beispiele 58-65:

In den folgenden Beispielen wurden Multifilamente eingesetzt, welche aus einem Aramid auf der Basis von 100 Mol % Terephthalsäure, 50 Mol % para-Phenylendiamin und 50 Mol % 3,4'-Diaminodiphenylether bestehen.

Bei dem Multifilamenten handelt es sich um ein nach üblichem Verfahren naßgesponenenes und nachbehandeltes Faserkabel. Die Einlagerung erfolgte in Zementfiltrat: Portland Zement PZ 35 (200 g in 1 l Wasser)

### Beispiele 58-61:

Ein Faserkabel aus Filamenten des oben gekennzeichneten Aramids des Gesamttiters von 1700 dtex wurde 24 Stunden lang in Zementfiltrat des pH-Werts von 12,5 und bei unterschiedlichen Temperaturen gelagert. In der folgenden Tabelle werden Zugfestigkeiten, Moduli und Reißdehnungen der Proben nach dem Lagern angegeben. Beispiel 58 zeigt die Werte für die unbehandelte Faser.

| Beispiel Nr. | 58 | 59 | 60 | 61 |
|---|---|---|---|---|
| Lagertemperatur (°C) | - | 22 | 60 | 95 |
| Zugfestigkeit (cN/tex) | 225 | 225 | 235 | 240 |
| Modul (N/tex) | 60 | 60 | 60 | 60 |
| Reißdehnung (%) | 4 | 4 | 4 | 4 |

### Beispiele 62-65:

Ein Faserkabel aus Filamenten des oben gekennzeichneten Aramids des Gesamttiters von 1700 dtex wurde 24 Stunden lang in Natronlauge unterschiedlichen pH-Werts bei 60°C gelagert. In der folgenden Tabelle werden Zugfestigkeiten, Moduli und Reißdehnungen der Proben nach dem Lagern angegeben. Beispiel 62 zeigt die Werte für die unbehandelte Faser.

| Beispiel Nr. | 62 | 63 | 64 | 65 |
|---|---|---|---|---|
| pH-Wert | - | 10 | 12 | 14 |
| Zugfestigkeit (cN/tex) | 225 | 230 | 245 | 245 |
| Modul (N/tex) | 60 | 60 | 60 | 60 |
| Reißdehnung (%) | 4 | 4 | 4 | 4 |

## Patentansprüche

1. Verfahren zum Erhalt oder zur Erhöhung der Zugfestigkeit bei der Einlagerung von Multifilamenten aus aromatischen Copolyamiden, welche überwiegend aus para-Monomeren aufgebaut sind und in organischen aprotischen und polaren Lösungsmitteln löslich sind, in alkalische Medien, umfassend die Maßnahmen:
a) Herstellen von Multifilamenten aus besagten aromatischen Copolyamiden nach an sich üblichen Trocken- oder Naßspinnverfahren,
b) Nachbehandlung der erhaltenen Multifilamente in an sich bekannter Weise, und
c) Einlagerung von Multifilamenten mit einem Gesamttiter von 840 bis 18400 dtex in einer wässrigen Aufschlämmung oder Abmischung eines hydraulisch abbindenden anorganischen Materials, inbesondere Beton oder Zement, welche einen pH-Wert von mindestens 10 aufweist, zumindest für eine solche Zeitspanne und bei einer Temperatur von 20 bis 100°C, so daß die Zugfestigkeit besagter Fasern, bezogen auf die Zugfestigkeit der in Schritt c) eingesetzten Fasern, zumindest erhalten bleibt oder sich erhöht, wobei eine nachfolgende Sattdampfbehandlung in einem Autoklaven ausgeschlossen ist.

2. Verfahren nach Anspruch 1, worin die Lagerung der Multifilamente in Schritt c) zumindest für eine solche Zeitspanne erfolgt, so daß sich die Zugfestigkeit besagter Multifilamente, bezogen auf die Zugfestigkeit der in Schritt c) eingesetzten Multifilamente, zumindest um 1 %, insbesondere um 2 bis 10 %, erhöht.

3. Verfahren nach Anspruch 1, worin in Schritt c) Multifilamente eingesetzt werden, die eine anfängliche Zugfestigkeit von mindestens 120 cN/tex und einen anfänglichen Elastizitätsmodul, bezogen auf 100 % Dehnung, von mehr als 30 N/tex aufweisen.

4. Verfahren nach Anspruch 1, worin die wässrige Aufschlämmung oder Abmischung eines hydraulisch abbindenden anorganischen Materials, inbesondere Beton oder Zement, einen pH-Wert von größer gleich 12, vorzugsweise von 12 bis 14, aufweist.

5. Verfahren nach Anspruch 4, worin als Lagermedium eine wässrige Abmischung eines hydraulisch abbindenden anorganischen Materials verwendet wird und die Einlagerung nach dem Einmischen der Multifilamente und nach der Formgebung der erhaltenen Mischung erfolgt.

6. Verfahren nach Anspruch 1, worin die Einlagerung bei einer Temperatur von 20 bis 60°C erfolgt.

7. Verfahren nach Anspruch 1, worin ein Multifilament bestehend aus aromatischem Copolyamid eingesetzt wird, welches eine inhärente Viskosität von mindestens 2,4 dl/g (gemessen an Lösungen von 0,5 g Polyamid in 100 ml 98 gew%iger Schwefelsäure bei 25°C) und wenigstens die wiederkehrenden Struktureinheiten der Formeln I, II und III aufweist
(-OC-Ar-CO-NH-Ar'-NH-) (I), 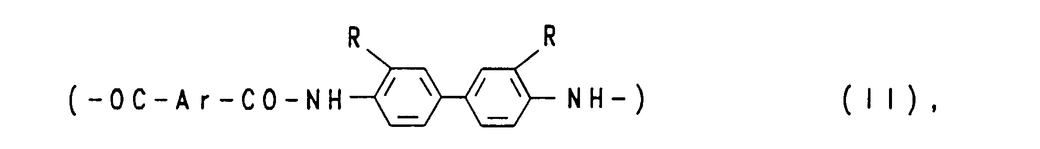 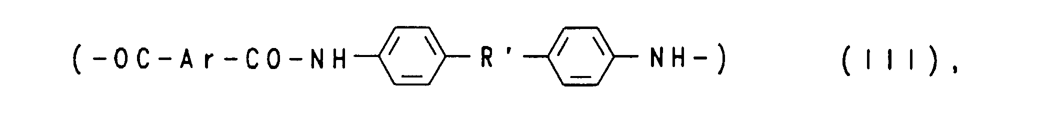
worin -Ar- und -Ar'- zweiwertige organische Reste sind, bei denen die Valenzbindungen in para- oder vergleichbarer koaxialer oder paralleler Stellung zueinander stehen,
R einen C₁-C₄-Alkylrest, insbesondere Methyl, einen C₁-C₄-Alkoxyrest, insbesondere Methoxy oder ein Chloratom darstellt,
R'einen unsubstituierten oder alkylsubstituierten Methylenrest oder eine Gruppierung
-O-Ar-O- darstellt, worin -Ar- die oben definierte Bedeutung annimmt, und die Anteile der wiederkehrenden Struktureinheiten I, II und III, bezogen auf die Gesamtmenge dieser Struktureinheiten im Polymeren, innerhalb eines Bereiches liegen, der durch die folgenden Eckpunkte definiert ist:
Punkt Q entsprechend 5 Mol % Struktureinheiten der Formel I,
45 Mol % Struktureinheiten der Formel II und 50 Mol % Struktureinheiten der Formel III,
Punkt R entsprechend 45 Mol % Struktureinheiten der Formel I,
5 Mol % Struktureinheiten der Formel II und 50 Mol % Struktureinheiten der Formel III,
Punkt S entsprechend 60 Mol % Struktureinheiten der Formel I,
35 Mol % Struktureinheiten der Formel II und 5 Mol % Struktureinheiten der Formel III,
Punkt T entsprechend 20 Mol % Struktureinheiten der Formel I,
75 Mol % Struktureinheiten der Formel II und 5 Mol % Struktureinheiten der Formel III, und
Punkt U entsprechend 5 Mol % Struktureinheiten der Formel I,
80 Mol % Struktureinheiten der Formel II und 15 Mol % Struktureinheiten der Formel III.

8. Verfahren nach Anspruch 7, worin -Ar- und -Ar'- 1,4-Phenylen sind, R Methoxy oder Chlor oder insbesondere Methyl darstellt und R'-O-1,4-Phenylen-O- ist, wobei die Mengenanteile der wiederkehrenden Struktureinheiten, bezogen auf die Gesamtmenge dieser Struktureinheiten innerhalb des Polymeren, innerhalb der folgenden Bereiche liegen:
wiederkehrende Struktureinheit der Formel I: 15 bis 45 Mol %,
wiederkehrende Struktureinheit der Formel II: 20 bis 70 Mol %, und
wiederkehrende Struktureinheit der Formel III: 15 bis 50 Mol %.

9. Verfahren nach Anspruch 1, worin ein Multifilament bestehend aus aromatischem Copolyamid eingesetzt wird, welches eine inhärente Viskosität von 2,4 bis 6,5 dl/g (gemessen an Lösungen von 0,5 g Polyamid in 100 ml 98 gew%iger Schwefelsäure bei 25°C) und wenigstens die wiederkehrenden Struktureinheiten der Formeln I, IV und V aufweist
(-OC-Ar-CO-NH-Ar'-NH-) (I), 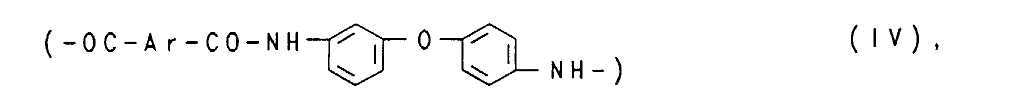 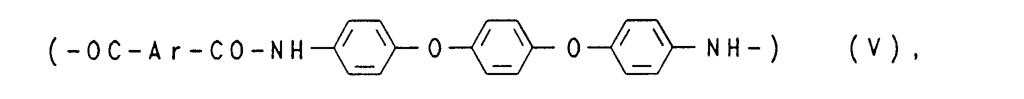
worin -Ar- und -Ar'- die in Anspruch 8 definierten Bedeutungen besitzen, und die Anteile der wiederkehrenden Struktureinheiten I, V und VI, bezogen auf die Gesamtmenge dieser Struktureinheiten im Polymeren, innerhalb folgender Bereiche liegen:
wiederkehrende Struktureinheit der Formel I: 40 bis 65 Mol %,
wiederkehrende Struktureinheit der Formel IV: 5 bis 55 Mol %, und
wiederkehrende Struktureinheit der Formel V: 5 bis 35 Mol %.

10. Verfahren nach Anspruch 9, worin -Ar- und -Ar'- 1,4-Phenylen sind, und wobei die Mengenanteile der wiederkehrenden Struktureinheiten, bezogen auf die Gesamtmenge dieser Struktureinheiten innerhalb des Polymeren, innerhalb der folgenden Bereiche liegen:
wiederkehrende Struktureinheit der Formel I: 45 bis 55 Mol %,
wiederkehrende Struktureinheit der Formel IV: 35 bis 45 Mol %, und
wiederkehrende Struktureinheit der Formel V: 5 bis 25 Mol %.

11. Verfahren nach Anspruch 1, worin ein Multifilament bestehend aus aromatischem Copolyamid eingesetzt wird, welches eine inhärente Viskosität von mindestens 2,4 dl/g (gemessen an Lösungen von 0,5 g Polyamid in 100 ml 98 gew.-%iger Schwefelsäure bei 25°C) und wenigstens die wiederkehrenden Struktureinheiten der Formel I und VI aufweist
(OC-Ar-CO-NH-Ar'-NH-) (I),
und 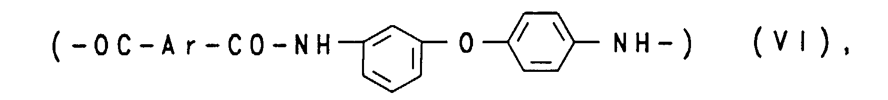 worin Ar und Ar' die in Anspruch 8 definierten Bedeutungen besitzen und die Anteile der wiederkehrenden Struktureinheiten I und VI, bezogen auf die Gesamtmenge dieser Struktureinheiten in Polymeren, innerhalb folgender Bereiche liegen:
Formel 1: 50 bis 60 Mol %; Formel VI: 40 bis 50 Mol %.

12. Formkörper erhältlich nach dem Verfahren nach Anspruch 5.

13. Formkörper nach Anspruch 12, dadurch gekennzeichnet, daß dieser Multifilamente mit einem Gesamttiter von 840 bis 18400 dtex enthält.

14. Verwendung der nach dem Verfahren gemäß Anspruch 1 behandelten oder zu behandelnden Multifilamente zur Herstellung von Gips, Zement, Mörteln, Putzen, Estrich oder Beton.

## Claims

1. A process for maintaining or increasing the tensile strength of multifilaments of aromatic copolyamides which are built up chiefly from para-monomers and are soluble in organic aprotic and polar solvents, in the course of storage in alkaline media, comprising the measures:
a) production of multifilaments from said aromatic copolyamides by dry or wet spinning processes which are customary per se,
b) after-treatment of the resulting multifilaments in a manner which is known per se, and
c) storage of the multifilaments having an overall linear density of 840 to 18,400 dtex in an aqueous slurry or mixture of a hydraulically setting inorganic material, in particular concrete or cement, which has a pH of at least 10 for at least a period of time and at a temperature of 20 to 100°C such that the tensile strength of said fibers, based on the tensile strength of the fibers employed in step c), is at least retained or increased, a subsequent saturated steam treatment in an autoclave not being carried out.

2. The process as claimed in claim 1, wherein the storage of the multifilaments in step c) is carried out at least for a period of time such that the tensile strength of said multifilaments, based on the tensile strength of the multifilaments employed in step c), is increased by at least 1%, in particular by 2 to 10%.

3. The process as claimed in claim 1, wherein multifilaments which have an initial tensile strength of at least 120 cN/tex and an initial elasticity modulus, based on 100% elongation, of more than 30 N/tex, are employed in step c).

4. The process as claimed in claim 1, wherein the aqueous slurry or mixture of a hydraulically setting inorganic material, in particular concrete or cement, has a pH equal to or greater than 12, preferably 12 to 14.

5. The process as claimed in claim 4, wherein an aqueous mixture of a hydraulically setting inorganic material is used as the storage medium and storage is carried out after mixing in of the multifilaments and after shaping of the resulting mixture.

6. The process as claimed in claim 1, wherein the storage is carried out at a temperature of 20 to 60°C.

7. The process as claimed in claim 1, wherein a multifilament consisting of aromatic copolyamide is employed which has an intrinsic viscosity of at least 2.4 dl/g (measured on solutions of 0.5 g of polyamide in 100 ml of 98% strength by weight sulfuric acid at 25°C) and contains at least the recurring structural units of the formulae I, II and III
(-OC-Ar-CO-NH-Ar'-NH-) (I) 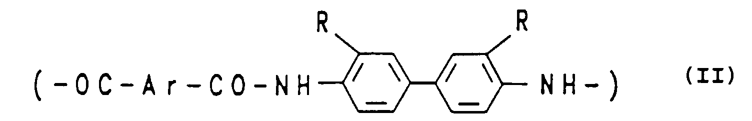 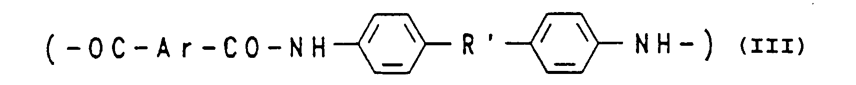
in which -Ar- and -Ar'- are divalent organic radicals in which the valency bonds are in the para-position or a comparable coaxial or parallel position relative to one another,
R is a C₁-C₄-alkyl radical, in particular methyl, a C₁-C₄-alkoxy radical, in particular methoxy, or a chlorine atom,
R' is an unsubstituted or alkyl-substituted methylene radical or a grouping
-O-Ar-O-, in which -Ar- assumes the meaning defined above, and the proportions of the recurring structural units I, II and III, based on the total amount of these structural units in the polymer, lie within a range defined by the following corner points:
point Q corresponding to 5 mol% of structural units of the formula I, 45 mol% of structural units of the formula II and 50 mol% of structural units of the formula III,
point R corresponding to 45 mol% of structural units of the formula I, 5 mol% of structural units of the formula II and 50 mol% of structural units of the formula III,
point S corresponding to 60 mol% of structural units of the formula I, 35 mol% of structural units of the formula II and 5 mol% of structural units of the formula III,
point T corresponding to 20 mol% of structural units of the formula I, 75 mol% of structural units of the formula II and 5 mol% of structural units of the formula III, and
point U corresponding to 5 mol% of structural units of the formula I, 80 mol% of structural units of the formula II and 15 mol% of structural units of the formula III.

8. The process as claimed in claim 7, wherein -Ar- and -Ar'- are 1,4-phenylene, R is methoxy or chlorine or, in particular, methyl and R' is -O-1,4-phenylene-O-, the proportions of the amounts of the recurring structural units, based on the total amount of these structural units within the polymer, lying within the following ranges:
recurring structural unit of the formula I: 15 to 45 mol%,
recurring structural unit of the formula II: 20 to 70 mol%, and
recurring structural unit of the formula III: 15 to 50 mol%.

9. The process as claimed in claim 1, wherein a multifilament consisting of aromatic copolyamide is employed which has an intrinsic viscosity of 2.4 to 6.5 dl/g (measured on solutions of 0.5 g of polyamide in 100 ml of 98% strength by weight sulfuric acid at 25°C) and contains at least the recurring structural units of the formulae I, IV and V
(-OC-Ar-CO-NH-Ar'-NH-) (I) 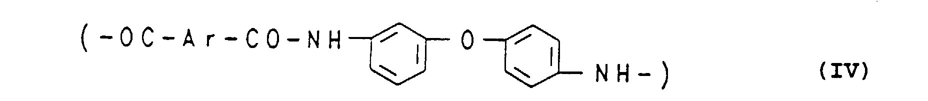 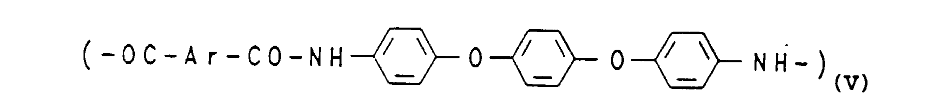
in which -Ar- and -Ar'- have the meanings defined in claim 7, and the proportions of the recurring structural units I, IV and V, based on the total amount of these structural units in the polymer, lie within the following ranges:
recurring structural unit of the formula I: 40 to 65 mol%,
recurring structural unit of the formula IV: 5 to 55 mol%, and
recurring structural unit of the formula V: 5 to 35 mol%.

10. The process as claimed in claim 9, wherein -Ar- and -Ar'- are 1,4-phenylene, and wherein the proportions of the amounts of the recurring structural units, based on the total amount of these structural units within the polymer, lie within the following ranges:
recurring structural unit of the formula I: 45 to 55 mol%,
recurring structural unit of the formula IV: 35 to 45 mol%, and
recurring structural unit of the formula V: 5 to 25 mol%.

11. The process as claimed in claim 1, wherein a multifilament consisting of aromatic copolyamide is employed which has an intrinsic viscosity of at least 2.4 dl/g (measured on solutions of 0.5 g of polyamide in 100 ml of 98% strength by weight sulfuric acid at 25°C) and contains at least the recurring structural units of the formulae I and VI
(OC-Ar-CO-NH-Ar'-NH-) (I)
and 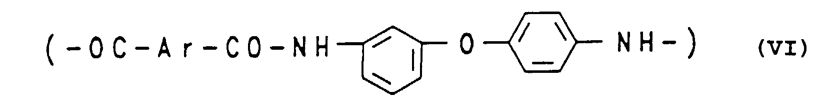 in which Ar and Ar' have the meanings defined in claim 7 and the proportions of the recurring structural units I and VI, based on the total amount of these structural units in the polymer, lie within the following ranges:
formula I: 50 to 60 mol%; formula VI: 40 to 50 mol%.

12. A shaped article obtainable by the process as claimed in claim 5.

13. The shaped article as claimed in claim 12, which contains multifilaments having an overall linear density of 840 to 18,400 dtex.

14. The use of the multifilaments treated or to be treated by the process as claimed in claim 1 for the production of gypsum, cement, mortars, plasters, screed or concrete.

## Revendications

1. Procédé pour l'acquisition ou l'augmentation de la résistance à la traction lors de l'incorporation des multifilaments en copolyamides aromatiques, qui sont constitués principalement de para-monomères et solubles dans les solvants organiques aprotiques et polaires, en milieu alcalin, comprenant les mesures suivantes :
a) préparation de multifilaments en copolyamides aromatiques précités, selon un procédé courant de filage à sec ou au mouillé,
b) post-traitement des multifilaments obtenus de façon connue en soi, et
c) incorporation de multifilaments avec un titre global de 840 à 18 400 dtex dans une suspension ou un mélange aqueux d'une matière inorganique à prise hydraulique, plus particulièrement le béton ou le ciment, et qui présente un pH d'au moins 10, au moins dans un espace de temps tel et à une température de 20 à 100 °C, que la résistance à la traction desdites fibres, par rapport à la résistance à la traction des fibres utilisées à l'étape c), reste au moins conservée ou bien qu'elle augmente, un traitement à la vapeur d'eau saturée ultérieur en autoclave étant exclu.

2. Procédé selon la revendication 1, où le stockage des multifilaments à l'étape c) est effectué dans un espace de temps au moins tel que la résistance à la traction desdits multifilaments par rapport à la résistance à la traction des multifilaments utilisés à l'étape c), augmente d'au moins 1 %, en particulier de 2 à 10 %.

3. Procédé selon la revendication 1, où à l'étape c) on utilise des multifilaments qui présentent une résistance à la traction initiale d'au moins 120 cN/tex et un module d'élasticité initial, par rapport à un étirage de 100 %, supérieur à 30 N/tex.

4. Procédé selon la revendication 1, dans lequel la suspension aqueuse ou le mélange aqueux d'une matière inorganique à prise hydraulique, plus particulièrement du béton ou du ciment, présente une valeur de pH supérieure ou égale à 12, de préférence de 12 à 14.

5. Procédé selon la revendication 4, dans lequel on utilise un mélange aqueux d'une matière inorganique à prise hydraulique et l'incorporation est effectuée par mélange des multifilaments et après la mise en forme du mélange obtenu.

6. Procédé selon la revendication 1, où l'incorporation est effectué à une température de 20 à 60 °C.

7. Procédé selon la revendication 1, où on utilise un multifilament constitué d'un copolyamide aromatique, qui a une viscosité inhérente d'au moins 2,4 dl/g (mesurée sur des solutions de 0,5 g de polyamide dans 100 ml d'acide sulfurique à 98 %, à 25 °C) et présente au moins les motifs de structure récurrents de formules I, II et III
(-OC-Ar-CO-NH-Ar'-NH-) (I), 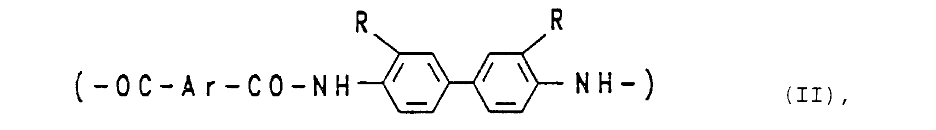 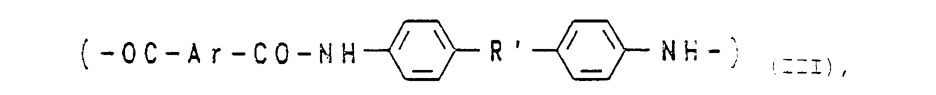
dans lesquelles -Ar- et -Ar'- représentent des restes organiques bivalents dans lesquels les liaisons de valence se trouvent en position para- ou en position comparable coaxiale ou parallèle les uns par rapport aux autres,
R représente un reste alkyle en C₁-C₄, plus particulièrement méthyle, un reste alcoxy en C₁-C₄, plus particulièrement méthoxy ou un atome de chlore,
R' représente un reste méthylène non substitué ou substitué par alkyle ou un groupement
-O-Ar-O-, où Ar a la signification donnée ci-dessus et les taux en motisf de structure récurrents I, II et III, par rapport à la quantité totale de ces motifs structuraux dans le polymère se trouve dans un intervalle défini par les points suivants :
le point Q correspondant à 5 % en moles de motifs de structure de formule I, à 45 % en moles de motifs de structure de formule II et à 50 % en moles de motifs de structure de formule III,
le point R correspond à 45 % en moles de motifs de structure de formule I, à 5 % en moles de motifs de structure de formule II et à 50 % en moles de motifs de structure de formule III,
le point S correspond à 60 % en moles de motifs de structure de formule I, à 35 % en moles de motifs de structure de formule II et à 5 % en moles de motifs de structure de formule III,
le point T correspond à 20 % en moles de motifs de structure de formule I, à 75 % en moles de motifs de structure de formule II et à 5 % en moles de motifs de structure de formule III et
le point U correspond à 5 % en moles de motifs de structure de formule I, à 80 % en moles de motifs de structure de formule II et à 15 % en moles de motifs de structure de formule III.

8. Procédé selon la revendication 7, où -Ar- et -Ar'- représentent le 1,4-phénylène, R représente le groupe méthoxy ou le chlore et plus particulièrement le groupe méthyle et R' représente -O-1,4-phénylène-O-, les taux des motifs de structure récurrents, par rapport à la quantité totale de ces motifs de structure dans le polymère, étant dans les intervalles suivants :
le motif de structure récurrent de formule I : de 15 à 45 % en moles,
le motif de structure récurrent de formule II : de 20 à 70 % en moles et
le motif de structure récurrent de formule III : de 15 à 50 % en moles.

9. Procédé selon la revendication 1, où l'on utilise un multifilament constitué d'un copolyamide aromatique qui présente une viscosité inhérente d'au moins 2,4 à 6,5 dl/g, de préférence de 3,0 à 6,5 dl/g (mesurée sur des solutions de 0,5 g de polyamide dans 100 ml d'acide sulfurique à 98 %, à 25 °C) et d'au moins les motifs de structure récurrents de formules I, IV et V
(-OC-Ar-CO-NH-Ar'-NH-) (I), 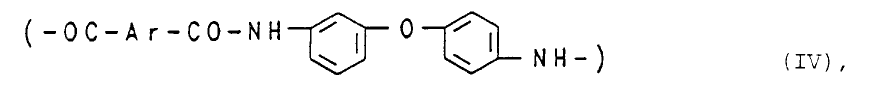 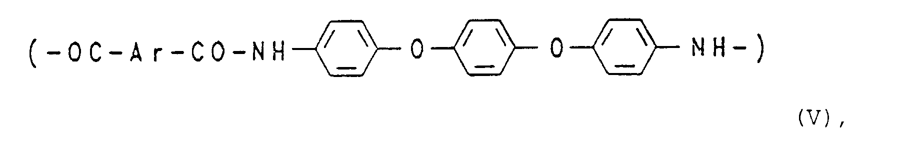
dans lesquelles -Ar- et -Ar'- ont les définitions données ci-dessus et les taux en motifs de structure récurrents I, IV et V, par rapport à la quantité totale de ces motifs de structure récurrents dans le polymère, se trouvent dans les intervalles suivants :
le motif de structure récurrent de formule I : de 40 à 65 % en moles,
le motif de structure récurrent de formule IV : de 5 à 55 % en moles, et
le motif de structure récurrent de formule V : de 5 à 35 % en moles.

10. Procédé selon la revendication 9, où -Ar- et -Ar'- ont les définitions données ci-dessus et les taux en motifs de structure récurrents I, IV et V, par rapport à la quantité totale de ces motifs de structure récurrents dans le polymère, se trouvent dans les intervalles suivants :
le motif de structure récurrent de formule I : de 45 à 55 % en moles,
le motif de structure récurrent de formule IV : de 35 à 45 % en moles et
le motif de structure récurrent de formule V : de 5 à 25 % en moles.

11. Procédé selon la revendication 1, où l'on utilise un multifilament constitué d'un copolyamide aromatique qui présente une viscosité inhérente d'au moins 2,4 dl/g (mesurée sur des solutions de 0,5 g de polyamide dans 100 ml d'acide sulfurique à 98 % à 25 °C) et présente au moins des motifs de structure récurrents de formules I et VI
(OC-Ar-CO-NH-Ar'-NH-) (I)
et 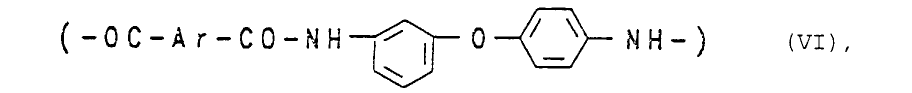 dans lesquelles Ar et Ar' ont les significations définies dans la revendication 8 et les taux en motifs de structure I et VI récurrents, par rapport à la quantité totale de ces motifs de structures dans le polymère, se trouve dans l'intervalle suivant :
formule I : de 50 à 60 % en moles ; formule VI : de à 40 à 50 % en moles.

12. Corps façonné que l'on peut obtenir selon le procédé selon la revendication 5.

13. Corps façonné selon la revendication 12, caractérisé en ce qu'il contient des multifilaments ayant un titre global de 840 à 18 400 dtex.

14. Utilisation des multifilaments traités ou à traiter par le procédé selon la revendication 1, pour la préparation de plâtre, de ciment, de mortier, d'enduit, de plancher en plâtre ou de béton.
